(19) Europäisches Patentamt
European Patent Office
Office européen des brevets

(11) EP 4 444 766 B1

(12) EUROPEAN PATENT SPECIFICATION

(45) Date of publication and mention of the grant of the patent:
**15.10.2025 Bulletin 2025/42**

(21) Application number: **22830808.6**

(22) Date of filing: **07.12.2022**

(51) International Patent Classification (IPC):
***C08F 8/30*** *(2006.01)* ***C08F 220/14*** *(2006.01)*
***C08F 220/18*** *(2006.01)* ***C08F 265/06*** *(2006.01)*

(52) Cooperative Patent Classification (CPC):
(C-Sets available)
**C08F 220/1804; C08F 8/30; C08F 220/14; C08F 265/06** (Cont.)

(86) International application number:
**PCT/EP2022/084729**

(87) International publication number:
**WO 2023/104855 (15.06.2023 Gazette 2023/24)**

# (54) AQUEOUS BINDER COMPOSITION

WÄSSRIGE BINDEMITTELZUSAMMENSETZUNG

COMPOSITION DE LIANT AQUEUX

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.12.2021 EP 21213556**

(43) Date of publication of application:
**16.10.2024 Bulletin 2024/42**

(73) Proprietor: **Covestro (Netherlands) B.V.**
**6167 RD Geleen (NL)**

(72) Inventors:
- **NABUURS, Tijs**
  **5411 SC Zeeland (NL)**
- **KASTELIJN, Maud**
  **5631 LB Eindhoven (NL)**

(74) Representative: **Levpat**
**c/o Covestro AG**
**Gebäude K12**
**51365 Leverkusen (DE)**

(56) References cited:
**US-A1- 2014 058 031**
**US-A1- 2015 010 863**
**US-B2- 9 012 027**

EP 4 444 766 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 8/30, C08F 265/06;**
**C08F 220/14, C08F 220/06, C08F 220/1804, C08F 220/58;**
**C08F 265/06, C08F 220/1804, C08F 222/14, C08F 220/58**

## Description

The present invention relates to the field of vinyl polymers especially those useful in the preparation of coatings.

Aqueous vinyl polymer coating emulsions are well known and are for example described in US4988762, WO2003/031526, WO95/29963, US2014/058031, US9012027, US2015/010863 and WO95/29944. Aqueous emulsions are a class of disperse systems consisting of at least one organic phase emulsified in water. The organic polymer (the disperse phase) is dispersed in water (the continuous phase). To stabilize the particles containing the organic phase, one needs a third component, namely a surfactant (also referred to as emulsifier). The presence of a surfactant is crucial in the formation of the polymer particles and for its long-term stability. In the preparation of vinyl polymer emulsions, conventional surfactants are usually applied such as for example Na, K and NH4 alkyl sulphates such as sodium lauryl sulphate (SLS) and sodium dodecyl benzene sulphonate (SDBS).

The present invention in particular relates to aqueous binder compositions comprising dispersed polymer particles comprising at least two vinyl polymers, i.e. a vinyl polymer A and a vinyl polymer B, whereby the vinyl polymer A is more hydrophilic than the vinyl polymer B, the vinyl polymer A has a lower weight average molecular weight than the vinyl polymer B and the vinyl polymer B is obtained by aqueous emulsion polymerization in the presence of the vinyl polymer A. The use of such aqueous binder compositions containing polymer emulsions that are colloidally stabilized using low molecular weight and acid containing polymers, also known as polyelectrolyte stabilized polymer emulsions, is also well known in the art for the provision of waterborne binder material giving a favourable balance of minimum film forming temperature (MFFT) and hardness in coating applications.
See for example WO95/29963 and WO95/29944. WO95/29963 describes a process for preparing in situ a solvent-free aqueous cross-linkable polymer compositions by emulsion polymerisation of a) a softer (Tg 25°C less than "oligomer" B) olefinic hydrophobic polymer A in the presence of b) a harder (Tg 10 to 125°C) acid-functional "oligomer" B having cross-linking groups thereon; and then c) crosslinking the mixture of hard "oligomer" B and soft polymer A to form a composition with Koenig hardness of > =40 seconds and minimum film forming temperature (MFFT) of <= 55°C.
WO95/29944 describes a similar process to '63 where solvent free aqueous crosslinkable polymer compositions are prepared in situ from emulsion polymerization of a) a harder (Tg 25°C more than "oligomer" B) olefinic hydrophobic polymer A; in the presence of b) a softer (Tg < 50°C) acid-functional "oligomer" B having cross-linking groups thereon; and then c) cross-linking the mixture of soft "oligomer" B and hard polymer A to form a composition with Koenig hardness of > =40 seconds and 'MFFT' of <= 55°C. In WO95/29963 and WO95/29944 the acid functional oligomer acts as a surfactant (i.e. as emulsifying agent) in the polymerisation of the hydrophobic polymer and hence a stable emulsion can be obtained with only a very low level of added surfactant (not counting the acid-functional oligomer itself). The absence of added surfactant or the presence of very low levels of added surfactant is advantageous since surfactant remains in the coating after drying and conventionally applied added surfactants adversely affect the water resistance of the coating as for example taught in US4151143. However, the disadvantage of the aqueous binder compositions as described in WO95/29963 and WO95/29944 is that the adhesion to polyester-based substrates may not be sufficiently high. Polyester films have a broad range of commercially applications. They are widely used in packaging applications.

The object of the present invention is to provide aqueous binder compositions containing polymer emulsions that are colloidally stabilized using lower molecular weight and acid containing vinyl polymers, which are able to provide coatings with improved adhesion to polyester substrates.

It has surprisingly been found that this object can be achieved with an aqueous vinyl polymer binder composition comprising

(A) dispersed polymer particles comprising at least vinyl polymer A and vinyl polymer B,

wherein the vinyl polymer A has an acid value of from 26 to 110 mg KOH/g of vinyl polymer A,
wherein the vinyl polymer B has an acid value of below 16.5 mg KOH/g of vinyl polymer B,
wherein the weight average molecular weight (Mw) of the vinyl polymer B is higher than the weight average molecular weight (Mw) of the vinyl polymer A,
where the vinyl polymer A and the vinyl polymer B are present in a weight ratio of the vinyl polymer A to the vinyl polymer B of from 5:95 to 95:5,
wherein the vinyl polymer A is obtained by heterogeneous radical polymerization of a monomer composition A, wherein the monomer composition A comprises

i. ethylenically unsaturated monomers bearing crosslinkable functional groups in an amount of from 0.5 to 15 wt.% based on the total weight of the monomer composition A, and
ii. at most 2.5 wt.% of dialkyl itaconate ester, based on the total weight of the monomer composition A; and

wherein the vinyl polymer B is obtained by emulsion polymerizing a monomer composition B in the presence of the

vinyl polymer A,
wherein the monomer composition B comprises

i. dimethyl itaconate ester, diethyl itaconate ester or dibutyl itaconate ester, respectively, in an amount of from 20 to 60 wt.% based on the total weight of the monomer composition B, and
ii. at most 2.5 wt.% of at least one additional dialkyl itaconate ester, based on the total weight of the monomer composition B; and

(B) a crosslinking agent.

It has furthermore surprisingly been found that the residual monomer concentration in the inventive aqueous binder compositions is low, and lower compared to when dialkyl itaconate ester is also present in vinyl polymer A in an amount higher than 2.5 wt.% based on the total weight of the monomer composition A. A low residual monomer concentration in aqueous binder compositions is advantageous since potential toxic unreacted monomer can migrate from the coating which is not desired in for example food contact applications and for indoor air quality.

WO2013113936 describes aqueous binder coating compositions containing polymer emulsions that are colloidally stabilized using low molecular weight and acid containing polymers, whereby the oligomer composition and the polymer composition each independently comprises optionally at least 23 % by weight of at least one monomer represented by Formula 1

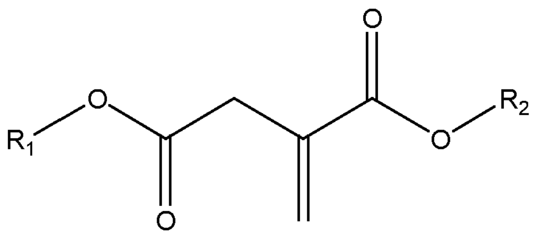

Formula 1

where both $R_1$ and $R_2$ independently represent an optionally substituted hydrocarbo moiety having from 4 to 10 carbon atoms, and optionally of one or more monomers represented by Formula 2

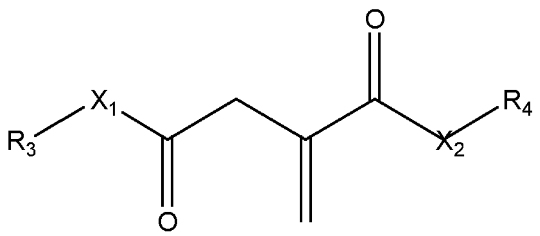

Formula 2

where $R_3$ and $R_4$ independently represent H or an optionally substituted hydrocarbo moiety having from 1 to 20 carbon atoms
$X_1$ and $X_2$ independently represents O or $NR_5$ where $R_5$ denotes H or an optionally substituted hydrocarbo moiety having from 1 to 20 carbon atoms.

This patent publication does not disclose the aqueous vinyl polymer binder compositions according to the invention and also does not disclose or teach that the aqueous vinyl polymer binder compositions according to the invention result in coatings with improved adhesion to polyester substrates and/or that the residual monomer level in the inventive aqueous binder compositions is low, and lower compared to when also dialkyl itaconate ester is present in vinyl polymer A in an amount higher than 2.5 wt.% based on the total weight of the monomer composition A.

The dispersions and coating compositions according to the invention are aqueous dispersions and coating compositions, respectively. As used herein, "aqueous" means that the principal solvent or carrier fluid, i.e. the continuous phase, in the coating composition is water. The continuous phase is preferably at least 80 wt.% water, more preferably at least 85 wt.%, even more preferably at least 90 wt.% water, and even more preferably at least 95 wt.%, based on the total weight of the continuous phase.

For all upper and/or lower boundaries of any range given herein, the boundary value is included in the range given. Thus, when saying from x to y, means including x and y.

In the present invention, the vinyl polymer A is obtained by heterogeneous radical polymerization of a monomer

composition A in an aqueous phase, wherein the monomer composition A comprises

i. ethylenically unsaturated monomers bearing crosslinkable functional groups in an amount of from 0.5 to 15 wt.% based on the total weight of the monomer composition A, and
ii. at most 2.5 wt.% of dialkyl itaconate ester, based on the total weight of the monomer composition A.

The heterogeneous radical polymerization of the monomer composition A is preferably effected in an aqueous continuous phase containing at most 20 wt.%, preferably at most 15 wt.%, more preferably at most 10 wt.%, even more preferably at most 5 wt.% of organic water-soluble solvent. The vinyl polymer A can be obtained by suspension or emulsion polymerization. The vinyl polymer A is preferably obtained by aqueous emulsion polymerisation.

The monomer composition A comprises ethylenically unsaturated monomers bearing crosslinkable functional groups in an amount of from 0.5 to 15 wt.%, preferably from 2 to 12 wt.%, more preferably from 5 to 10 wt.%, based on the total weight of the monomer composition A. The monomer composition A comprises at most 2.5 wt.% of dialkyl itaconate ester, preferably at most 2.0 wt.%, more preferably at most 1.5 wt.%, more preferably at most 1.0 wt.%, more preferably at most 0.5 wt.% based on the total weight of the monomer composition A.

The monomer composition A preferably consists of

A1) at least one carboxylic acid functional ethylenically unsaturated monomer A1;
A2) at least one ethylenically unsaturated monomer bearing crosslinkable functional groups (monomer A2), different from monomers A1, in an amount of from 0.5 to 15 wt.%, preferably from 2 to 12 wt.%, more preferably from 5 to 10 wt.% based on the total weight of the monomer composition A;
A3) optionally dialkyl itaconate ester (monomer A3) in an amount of at most 2.5 wt.%, preferably at most 2.0 wt.%, more preferably at most 1.5 wt.%, more preferably at most 1.0 wt.%, more preferably at most 0.5 wt.% based on the total weight of the monomer composition A; and
A4) at least one ethylenically unsaturated monomer A4 different from monomers A1, A2 and A3.

Most preferably, the monomer composition A is free of dialkyl itaconate esters. Accordingly, most preferably, the vinyl polymer A does not contain monomer A3.

The dialkylitaconate esters that are optionally present in vinyl polymer A in an amount of at most 2.5 wt.% are preferably according to the following structural formula

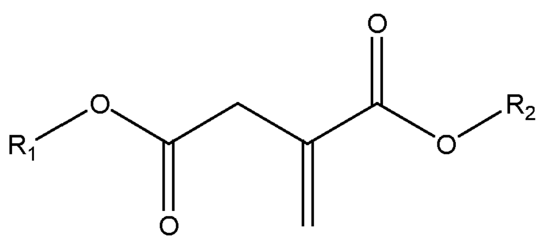

in which $R_1$ and $R_2$ independently represent an alkyl group.

The heterogeneous radical polymerization to obtain vinyl polymer A is conducted using a free radical initiator, appropriate heating and agitation (stirring) as is known to those skilled in the art. The polymerisation can employ conventional free radical initiators [e.g. hydrogen peroxide, t-butyl-hydroperoxide, cumene hydroperoxide, persulphates such as ammonium, potassium and sodium salts of persulphate, redox systems may be used, combinations such as t-butyl hydroperoxide isoascorbic acid and FeEDTA, or AZO initiators, such as 2,2'-Azobis(2-methylpropiononitrile) (AIBN), 2,2'-Azobis(2-methylbutyronitrile) (AMBN) are useful]; the amount of initiator, or initiator system, is generally 0.05 to 3% based on the weight of total monomers charged. The molecular weight of vinyl polymer A can be controlled by the use of well-known chain transfer agents. Preferred chain transfer agents can include mercaptans and alkyl halogenides. More preferred, the chain transfer agent is selected from the group of lauryl mercaptan, 3-mercapto propionic acid, i-octyl thioglycolate, mercaptoethanol, tetrabromo methane, or tribromo methane. Most preferably the chain transfer agent is a mercaptan, selected from the group of lauryl mercaptan, 3-mercapto propionic acid, i-octyl thioglycolate, and mercaptoethanol. The heterogeneous radical polymerization to obtain vinyl polymer A is preferably effected in the presence of one or more surfactants. The amount of added surfactant (not counting vinyl polymer A itself) in the preparation of vinyl polymer A is preferably from 0.03 to 2% by weight, more preferably in an amount of most 1% by weight based on the total weight of monomer composition A. Suitable surfactants include conventional anionic and/or non-ionic surfactants and mixtures thereof such as Na, K and $NH_4$ salts of dialkylsulphosuccinates, Na, K and $NH_4$ salts of sulphated oils, Na, K and $NH_4$ salts of alkyl sulphonic acids, Na, K and $NH_4$ alkyl sulphates, alkali metal salts of sulphonic acids; fatty alcohols, ethoxylated fatty

acids and/or fatty amides, and Na, K and $NH_4$ salts of fatty acids such as Na stearate and Na oleate. Other anionic surfactants include alkyl or (alk)aryl groups linked to sulphonic acid groups, sulphuric acid half ester groups (linked in turn to polyglycol ether groups), phosphonic acid groups, phosphoric acid analogues and phosphates or carboxylic acid groups. Non-ionic surfactants include polyglycol ether compounds and preferably polyethylene oxide compounds as disclosed in "Non-Ionic Surfactants - Physical Chemistry" edited by M.J. Schick, M. Decker 1987.

In the present invention, the vinyl polymer B is obtained by emulsion polymerizing a monomer composition B in the presence of the vinyl polymer A, wherein the monomer composition B comprises

i. dimethyl itaconate ester, diethyl itaconate ester or dibutyl itaconate ester, respectively, in an amount of from 20 to 60 wt.%, preferably in an amount of from 30 to 50 wt.% based on the total weight of the monomer composition B, and
ii. at most 2.5 wt.%, preferably at most 2.0 wt.%, more preferably at most 1.5 wt.%, more preferably at most 1.0 wt.%, more preferably at most 0.5 wt.%, even more preferably 0 wt.% of at least one additional dialkyl itaconate ester (other than dimethyl itaconate ester, diethyl itaconate ester or dibutyl itaconate ester, respectively), based on the total weight of the monomer composition B.

An emulsion polymerization process is, in itself, well known in the art and described in for example Handbook Emulsion Polymerization: Theory and Practice, 1975, by D.C. Blackley (ISBN 978-0-85334-627-2). Such a process involves polymerizing the monomers in a aqueous medium and conducting polymerization using a free-radical yielding initiator and (usually) appropriate heating (e.g. 30 to 120°C) and agitation (stirring) being employed. The aqueous emulsion polymerization can optionally be effected using, in addition to the vinyl polymer A, one or more conventional emulsifying agents, these being surfactants. The amount of surfactant, relative to total monomers used to prepare vinyl polymer B, is preferably less than 1 wt.%, more preferably less than 0.5 wt.%, even more preferably less than 0.2 wt.% and especially preferably 0 wt.%. Emulsion polymerization can be initiated using thermally decomposing initiators or redox couple initiators. Typical thermally decomposing initiators include persulphate salts, such as sodium, potassium, or ammonium persulphate, or organic azo functional initiators, such as for instance 2,2'-Azobis(2-methylpropiononitrile) (AIBN), 2,2'-Azobis(2-methylbutyronitrile) (AMBN), 2,2'-Azobis[2-(2-imidazolin-2-yl)propane]dihydrochloride, or 4,4'-Azobis(4-cyanovaleric acid). When using these initiators, emulsion polymerization is typically initiated at temperatures between 60 and 100 °C, more preferred between 70 and 95 °C. Typically, the concentration of thermally decomposing initiators is chosen between 0.1 and 2 wt-%, based on total monomer weight used to prepare vinyl polymer B. Alternatively, radical polymerizations can also be started using redox reagents, where an oxidator, mostly peroxides, is reacted with a reductor, conveniently in the presence of a transition metal ion, yielding initiating radicals. Typical examples of peroxides may include hydrogen peroxide, t-butyl hydroperoxide, cumyl hydrogen peroxide, and the like. Reductors may be chosen from the group of i-ascorbic acid, sodium metabisulphite, Brugolite FF6, sodium formaldehyde sulphoxylate, fructose, and the like. As transition metal ion normally ferrous or ferric ions are chosen, often as iron EDTA complex. Redox couple initiation can typically be done at temperatures between 10 and 100 °C, more conveniently between 20 and 90 °C, depending on the choice of reactants. Redox couple initiators are typically used in concentrations between 0.05 and 1 wt.%, based on total monomer weight. The molecular weight of vinyl polymer B can be controlled by the use of well-known chain transfer agents. Preferred chain transfer agent is a mercaptan, selected from the group of dodecyl mercaptan, 3-mercaptopropionic acid, isooctyl thioglycolate, and 2-mercaptoethanol. More preferred no transfer agent is applied in the preparation of vinyl polymer B.

The monomer composition B preferably comprises diethyl itaconate ester or dibutyl itaconate ester, respectively, in an amount of from 20 to 60 wt.%, preferably in an amount of from 30 to 50 wt.% based on the total weight of the monomer composition B; and the monomer composition B comprises at most 2.5 wt.%, preferably at most 2.0 wt.%, more preferably at most 1.5 wt.%, more preferably at most 1.0 wt.%, more preferably at most 0.5 wt.%, even more preferably 0 wt.% of at least one additional dialkyl itaconate ester (other than diethyl itaconate ester or dibutyl itaconate ester, respectively), based on the total weight of the monomer composition B. The dibutyl itaconate ester is preferably di-n-butyl itaconate ester. More preferably, the monomer composition B comprises diethyl itaconate ester in an amount of from 20 to 60 wt.%, more preferably in an amount of from 30 to 50 wt.% based on the total weight of the monomer composition B, and the monomer composition B comprises at most 2.5 wt.%, preferably at most 2.0 wt.%, more preferably at most 1.5 wt.%, more preferably at most 1.0 wt.%, more preferably at most 0.5 wt.%, even more preferably 0 wt.% of at least one additional dialkyl itaconate ester (other than diethyl itaconate ester), based on the total weight of the monomer composition B.

The monomer composition B preferably consists of

B1) optionally at least one carboxylic acid functional ethylenically unsaturated monomer B1;
B2) dimethyl itaconate ester, diethyl itaconate ester or dibutyl itaconate ester, respectively, (monomer B2) in an amount of from 20 to 60 wt.%, preferably in an amount of from 30 to 50 wt.% based on the total weight of the monomer composition B;
B3) optionally ethylenically unsaturated monomer B3 with crosslinkable functional groups different from monomers

B1; and
B4) at least one ethylenically unsaturated monomer B4 different from monomers B1, B2 and B3.

Monomer B2 is preferably diethyl itaconate ester or dibutyl itaconate ester. The dibutyl itaconate ester is preferably di-n-butyl itaconate ester. More preferably, monomer B2 is diethyl itaconate ester. Monomer B3 is preferably present in the monomer composition B in an amount of preferably of up to 10 wt.%, more preferably up to 8 wt.%, even more preferably from 1 to 5 wt.% based on the total weight of the monomer composition B.

*Carboxylic acid functional ethylenically unsaturated monomers A1 and B1*

The ethylenically unsaturated monomers bearing carboxylic acid functional groups which are present in vinyl polymer A and optionally present in vinyl polymer B are preferably independently selected from the group consisting of acrylic acid, methacrylic acid, itaconic acid, fumaric acid and any mixture thereof. More preferably, the ethylenically unsaturated monomers bearing carboxylic acid functional groups which are present in vinyl polymer A and optionally present in vinyl polymer B is independently methacrylic acid and/or acrylic acid and most preferably is methacrylic acid. Accordingly, most preferably, the ethylenically unsaturated monomer bearing carboxylic acid functional groups present in monomer composition A is methacrylic acid. If ethylenically unsaturated monomer bearing carboxylic acid functional groups is present in monomer composition B, the ethylenically unsaturated monomer carboxylic acid functional groups is preferably methacrylic acid.

*Ethylenically unsaturated monomers bearing crosslinkable functional groups A2 and B3*

Ethylenically unsaturated monomers bearing crosslinkable functional groups are also referred herein as crosslinkable monomers. The crosslinkable monomers bear functional groups for imparting crosslinkablity when the aqueous coating composition is subsequently dried. Said functional groups for imparting crosslinkability when the aqueous coating composition is subsequently dried are preferably carbonyl functional groups and more preferably are ketone functional groups. The ethylenically unsaturated monomers bearing crosslinkable functional groups which are present in vinyl polymer A and optionally present in vinyl polymer B are preferably carbonyl functional ethylenically unsaturated monomer(s), more preferably ketone functional ethylenically unsaturated monomer(s). The ketone functional ethylenically unsaturated monomers are preferably selected from the group consisting of acrylate esters, methacrylate esters and/or amides bearing an acetoacetoxy group (such as acetoacetoxyethyl methacrylate) and keto-containing amides (such as diacetone acrylamide) and any mixture thereof. Most preferably, the ethylenically unsaturated monomer bearing crosslinkable functional groups present in monomer composition A is diacetone acrylamide. If ethylenically unsaturated monomer bearing crosslinkable functional groups is present in monomer composition B, the ethylenically unsaturated monomer bearing crosslinkable functional groups is preferably diacetone acrylamide. Monomer B3 is preferably present in the monomer composition B in an amount of preferably of up to 10 wt.%, more preferably up to 8 wt.%, even more preferably from 1 to 5 wt.% based on the total weight of the monomer composition B.

The crosslinking agent that is present in the inventive aqueous vinyl polymer binder composition is reactable with any crosslinkable monomers of vinyl polymer A and optionally of vinyl polymer B on subsequent drying of the aqueous coating composition to effect crosslinking by virtue of forming covalent bonds. The crosslinking agent can be added during the preparation of vinyl polymer B. Preferably, the crosslinking agent is added after the preparation of vinyl polymer B. Ethylenically unsaturated monomers with ketone functional groups for imparting crosslinkablilty are used in combination with for example a polyamine or a polyhydrazide as crosslinking agent. An example of a suitable polyamine is isophorone diamine. The crosslinking agent is preferably a polyhydrazide, more preferably a dihydrazide functional compound (containing two hydrazide groups with a molar mass below 1000 g/mole, preferably with a molar mass below 500 g/mole, more preferably with a molar mass below 250 g/mole, especially preferably adipic dihydrazide. In this case, the equivalent molar ratio of crosslinkable functional groups present in the crosslinking agent to crosslinkable functional groups present in vinyl polymer A and vinyl polymer B is preferably from 0.3 to 1.1, more preferably from 0.4 to 1.0 and even more preferably from 0.5 to 0.95. The equivalent molar ratio is calculated by dividing the molar amount of crosslinkable functional groups present in the crosslinking agent to the molar amount of crosslinkable functional groups present in vinyl polymer A and vinyl polymer B, which molar amounts are calculated from the amount of crosslinking agent which is added to the binder composition and from the amount of crosslinkable monomers which are used for preparing the vinyl polymer A and vinyl polymer B.

*Ethylenically unsaturated monomer A4 different from monomers A1, A2 and A3*

The monomers A4 are ethylenically unsaturated monomers which are different from monomers A1, A2 and A3 and are amenable for copolymerization with monomers A1, A2 and A3. Useful monomers A4 include acrylates,

methacrylates, arylalkylenes, nitriles and any mixture thereof. Suitable arylalkylenes comprise (optionally hydrocarbo substituted) styrene and conveniently the optional hydrocarbo may be $C_{1-10}$ hydrocarbyl, more conveniently $C_{1-4}$ alkyl. Suitable arylalkylene monomers may be selected from: styrene, α-methyl styrene, vinyl toluene, t-butyl styrene, di-methyl styrene and/or mixtures thereof, especially styrene and/or α-methyl styrene. Suitable nitriles are acrylonitrile and methacrylonitrile. Preferably, the monomers A4 are selected from the group consisting of acrylates, methacrylates, arylalkylenes and any mixture thereof. Preferably the acrylate or methacrylate comprises hydrocarbo (meth)acrylate(s) and conveniently the hydrocarbo moiety may be $C_{1-20}$hydrocarbyl, more conveniently $C_{1-12}$alkyl, most conveniently $C_{1-10}$alkyl, for example $C_{1-8}$alkyl. Suitable (meth)acrylate(s) may be selected from: methyl (meth)acrylate, ethyl (meth) acrylate, 4-methyl-2-pentyl (meth) acrylate, 2-methylbutyl (meth) acrylate, isoamyl (meth)acrylate, sec-butyl (meth) acrylate, n-butyl (meth)acrylate, 2-ethylhexyl (meth)acrylate, 2-octyl (meth)acrylate, lauryl (meth)acrylate, isodecyl (meth)acrylate, cyclohexyl (meth)acrylate, isobornyl (meth)acrylate and/or mixtures thereof. More preferably, the monomers A4 are selected from the group consisting of methyl acrylate, methyl methacrylate, ethyl acrylate, ethyl methacrylate, n-butyl methacrylate, n-butyl acrylate, 2-ethylhexyl acrylate, 2-ethylhexyl methacrylate, styrene, α-methyl styrene and any mixture thereof. Even more preferably, the monomers A4 are selected from the group consisting of methyl methacrylate, ethyl acrylate, ethyl methacrylate, n-butyl methacrylate, n-butyl acrylate, 2-ethylhexyl acrylate and any mixture thereof.

*Ethylenically unsaturated monomer B4 different from monomers B1, B2 and B3*

The monomers B4 are ethylenically unsaturated monomers which are different from monomers B1, B2 and B3 and are amenable for copolymerization with monomers B1, B2 and B3. Useful monomers B4 include acrylates, methacrylates, arylalkylenes, nitriles and any mixture thereof. Suitable arylalkylenes comprise (optionally hydrocarbo substituted) styrene and conveniently the optional hydrocarbo may be $C_{1-10}$ hydrocarbyl, more conveniently $C_{1-4}$ alkyl. Suitable arylalkylene monomers may be selected from: styrene, α-methyl styrene, vinyl toluene, t-butyl styrene, di-methyl styrene and/or mixtures thereof, especially styrene and/or α-methyl styrene. Suitable nitriles are acrylonitrile and methacrylonitrile. Preferably, the monomers B4 are selected from the group consisting of acrylates, methacrylates, arylalkylenes and any mixture thereof. Preferably the acrylate or methacrylate comprises hydrocarbo (meth)acrylate(s) and conveniently the hydrocarbo moiety may be $C_{1-20}$hydrocarbyl, more conveniently $C_{1-12}$alkyl, most conveniently $C_{1-10}$alkyl, for example $C_{1-8}$alkyl. Suitable (meth)acrylate(s) may be selected from: methyl (meth)acrylate, ethyl (meth) acrylate, 4-methyl-2-pentyl (meth) acrylate, 2-methylbutyl (meth) acrylate, isoamyl (meth)acrylate, sec-butyl (meth) acrylate, n-butyl (meth)acrylate, 2-ethylhexyl (meth)acrylate, 2-octyl (meth)acrylate, lauryl (meth)acrylate, isodecyl (meth)acrylate, cyclohexyl (meth)acrylate, isobornyl (meth)acrylate and/or mixtures thereof. More preferably, the monomers B4 are selected from the group consisting of methyl acrylate, methyl methacrylate, ethyl acrylate, ethyl methacrylate, n-butyl methacrylate, n-butyl acrylate, 2-ethylhexyl acrylate, 2-ethylhexyl methacrylate, styrene, and any mixture thereof. Even more preferably, the monomers B4 are selected from the group consisting of methyl methacrylate, ethyl acrylate, ethyl methacrylate, n-butyl methacrylate, n-butyl acrylate, 2-ethylhexyl acrylate and any mixture thereof.

The acid value of of the vinyl polymer B is lower than the acid value of the vinyl polymer A. The vinyl polymer A has an acid value of from 26 to 110 mg KOH/g of vinyl polymer A, preferably from 39 to 80 mg KOH/g of vinyl polymer A, even more preferably from 45 to 80 mg KOH/g of vinyl polymer A. The vinyl polymer B has an acid value of below 16.5 mg KOH/g of vinyl polymer B, more preferably below 7 mg KOH/g of vinyl polymer B, even more preferably of 0 mg KOH/g of vinyl Polymer B. The acid value of is calculated based on the ethylenically unsaturated monomers charged in the polymerization processes to prepare the vinyl polymer, i.e. the acid value of the vinyl polymer A = ((total molar amount of carboxylic acid functional ethylenically unsaturated monomers charged in the polymerization processes to prepare the vinyl polymer A per gram of total amount of ethylenically unsaturated monomers charged in the polymerization processes to prepare the vinyl polymer A) * 56.1* 1000) and is denoted as mg KOH per gram of the vinyl polymer A; and the acid value of the vinyl polymer B = ((total molar amount of carboxylic acid functional ethylenically unsaturated monomers charged in the polymerization processes to prepare the vinyl polymer B per gram of total amount of ethylenically unsaturated monomers charged in the polymerization processes to prepare the vinyl polymer B) * 56.1* 1000) and is denoted as mg KOH per gram of the vinyl polymer B. In case carboxylic acid functional ethylenically unsaturated monomers are used which contains at least two acid functional groups, the molar amount of such carboxylic acid functional ethylenically unsaturated monomers must be multiplied with the number of carboxylic acid functional groups present in the carboxylic acid functional ethylenically unsaturated monomer.

The weight average molecular weight (Mw) of Polymer A is lower than the weight average molecular weight (Mw) of Polymer B.

The weight average molecular weight (Mw) is determined by SEC (Size Exclusion Chromatography) analysis using three PLgel 10 μm Mixed-B columns at 70°C on a Waters Alliance 2695 LC system with a Waters 2410 DRI detector and a Waters 2996 PDA detector. N-Methylpyrrolidone (NMP) with 8% v/v hexafluoroisopropanol (HFIP) and 10 mM lithiumbromide (LiBr) is used as eluent with a flow of 1 mL/min. The samples are dissolved in the eluent using a concentration of 5 mg polymer per mL solvent. The solubility is judged with a laser pen after 24 hours stabilization at room

temperature; if any scattering is visible the samples are filtered first and 150 μl sample solution is injected. The number and weight average molecular weight results are calculated with 12 narrow polystyrene standards from 474 to 1730000 Da.

The weight average molecular weight ($M_w$) of vinyl polymer A is preferably higher than 10 kg/mole and lower than 50 kg/mole, more preferably from 15 to 30 kg/mole.

The weight average molecular weight ($M_w$) of vinyl polymer B is preferably higher than 50 kg/mole, more preferably higher than 100 kg/mole and most preferably higher than 200 kg/mole.

The vinyl polymer A preferably has a glass transition temperature that is higher than the glass transition temperature of the vinyl polymer B. As used herein, the glass transition temperature is determined by calculation by means of the Fox equation. Thus, the $T_g$ in Kelvin, of a copolymer having "n" copolymerised comonomers is given by the weight fractions W of each comonomer type and the $T_g$'s of the homopolymers (in Kelvin) derived from each comonomer according to the equation:

$$\frac{1}{Tg} = \frac{W_1}{Tg_1} + \frac{W_2}{Tg_2} + \ldots + \frac{W_n}{Tg_n}$$

The calculated $T_g$ in Kelvin may be readily converted to °C.

The vinyl polymer A preferably has a glass transition temperature of at least 50 °C, more preferably from 50 to 120 °C, even more preferably from 80 to 110 °C. The vinyl polymer B preferably has a glass transition temperature lower than 50 °C, more preferably from -30 to 40 °C, even more preferably from -20 to 25 °C.

The vinyl polymer A needs to contain sufficient water-dispersing groups to render the vinyl polymer A partially or fully soluble in an aqueous medium (i.e. at least part of the carboxylic groups of the carboxylic acid functional ethylenically unsaturated monomer A1 are deprotonated to obtain ionic or potentially ionic water-dispersing groups) by neutralisation of at least a part of the carboxylic acid functional groups of carboxylic acid functional ethylenically unsaturated monomer A1. As used herein, a potentially ionic water-dispersing group means a group which under the relevant conditions can be converted into an ionic group by salt formation. Neutralisation may be achieved for example by adjusting the pH of the aqueous medium. Suitable neutralising agents are bases, examples of which include organic bases such as alkyl amines (e.g. triethyl amine, tributyl amine), morpholine and alkanol amines, and inorganic bases, examples of which include ammonia, NaOH, KOH and LiOH. Preferably the base is ammonia. Preferably the neutralization (the deprotonating) is effected following the heterogeneous radical polymerisation of the monomer composition A, and before, during, or before and during the aqueous emulsion polymerization of the monomer composition B. More preferably, the neutralization is effected before the aqueous emulsion polymerization of the monomer composition B. Prior to the neutralization, vinyl polymer A is not water-soluble but dispersed in water at low pH levels of for example from 2 to 5. If base is added before, during or before and during the aqueous emulsion polymerization of the monomer composition B, the hydrophilicity and water solubility of vinyl polymer A increases successively in line with the increasing degree of neutralization of the carboxylic acid groups. As the hydrophilicity and water solubility go up, the vinyl polymer A is able to act increasingly as a protective colloid for vinyl polymer B and, toward the end of the polymerisation, to stabilize the polymer dispersion with high polymer solid content.

The solid/solid weight ratio of vinyl polymer A to vinyl polymer B is in the range of from 5:95 to 95:5. The solid/solid weight ratio of vinyl polymer A to vinyl polymer B is respectively more preferably from 10 to 60 of vinyl polymer A to from 40 to 90 of vinyl polymer B, more preferably from 20 to 50 of vinyl polymer A to from 50 to 80 of vinyl polymer B; even more preferably from 23 to 35 of vinyl polymer A to from 65 to 77 of vinyl polymer B; and most preferably from 26 to 31 of vinyl polymer A to from 69 to 74 of vinyl polymer B.

The total amount of vinyl polymer A and vinyl polymer B in the aqueous vinyl polymer binder composition according to the invention is preferably at least 50 wt.%, more preferably at least 75 wt.% and most preferably is 100 wt.%, based on the total weight of the binders present in the aqueous binder composition. Therefore, in a preferred embodiment, the present invention relates to an aqueous binder composition comprising polymer particles dispersed in an aqueous medium, wherein the solid/solid weight ratio of vinyl polymer A to vinyl polymer B is in the range of from 5:95 to 95:5. The solid/solid weight ratio of vinyl polymer A to vinyl polymer B is respectively more preferably from 10 to 60 of vinyl polymer A to from 40 to 90 of vinyl polymer B, more preferably from 20 to 50 of vinyl polymer A to from 50 to 80 of vinyl polymer B; even more preferably from 23 to 35 of vinyl polymer A to from 65 to 77 of vinyl polymer B; and most preferably from 26 to 31 of vinyl polymer A to from 69 to 74 of vinyl polymer B.

The solid content in the inventive aqueous binder composition is preferably higher than 35 wt.% and lower than 60 wt.%, more preferably the solid content is from 40 wt.% to 50 wt.%. The solid content is determined by evaporation of the volatile compounds such as water and optionally solvent and volatile amines present in the aqueous polymer dispersion.

The present invention further relates to an aqueous coating composition as described above and further comprising at least one conventional ingredient.The aqueous coating composition of the invention may contain conventional ingredients, some of which have been mentioned above; examples include pigments, dyes, emulsifiers, plasticisers,

thickeners, heat stabilisers, levelling agents, anti-cratering agents, fillers, sedimentation inhibitors, UV absorbers, antioxidants, drier salts, co-solvents, wetting agents, matting agents and the like introduced at any stage of the production process of the aqueous binder composition or subsequently.

The present invention further relates to a coated substrate comprising (a) a substrate having a major surface; and (b) a coating deposited on at least a portion of the major surface of the substrate, wherein the coating is formed from the inventive aqueous coating composition. The substrate is preferably a polyester-based substrate comprising at least 75 wt.% of polyester preferably selected from the group consisting of polyethylene terephthalate, polyethylene naphthalate, ethylene terephthalate-ethylene naphthalate copolymer and mixture thereof and further comprising at most 25 wt.% of a polyolefin such as polyethylene and/or polypropylene. The polyester is preferably polyethylene terephthalate. The substrate is preferably a self-supporting polyester-based film which film may be oriented in one or more directions.

The present invention is now illustrated by the following examples. Unless otherwise specified all parts, percentages, and ratios are on a weight basis.

Examples and comparative experiments.

Preparation of vinyl polymer A not containing DXI (Oligomer 1 )

To a round-bottomed flask equipped with a condenser, thermometer and mechanical stirrer 986.9 parts of water and 1.2 parts of Aerosol GPG were charged. This mixture was heated to 70 °C. At 70 °C 10 % of a reactor feed consisting of 183.5 parts of water, 328.0 parts of methyl methacrylate, 26.6 parts of diacetone acrylamide, 44.3 parts of methacrylic acid, 44.3 parts of n-butyl methacrylate, 3.6 parts of Aerosol GPG, and 10.6 parts of 3-mercaptopropionic acid was added and the reactor contents were further heated to 85 °C. At 80 °C a solution consisting of 0.4 parts of ammonium persulphate and 20.1 parts of water was added.

At 85 °C, the remainder of the reactor feed was added over a period of 60 minutes. A catalyst feed, comprising 0.9 parts of ammonium persulphate and 61.1 parts of water was fed to the reactor over a period of 70 minutes. At the end of the addition of the reactor feed 9.0 parts of water were used to rinse the feed tank and were added to the reactor. A temperature of 85 °C was maintained for 20 minutes after which the reaction mixture was cooled to 80 °C. At 80 °C the emulsion was neutralised using 35.4 parts of a 25 % solution of ammonia in water mixed with 38.6 parts of water. The reaction mixture was subsequently kept at 80 °C for another 20 minutes before it was cooled to room temperature.

The resulting emulsion had a solid content of 25.3 % and a pH of 7.9.

Preparation of Polymer emulsion 1 - Vinyl polymer A not containing DXI and vinyl polymer B containing DMI

To a round-bottomed flask equipped with a condenser, thermometer and mechanical stirrer 876.7 parts of Oligomer 1 were added. The contents of the reactor were heated to 60 °C.

33 % of a reactor feed consisting of 24.8 parts of water, 11.1 parts of diacetone acrylamide DAAM, 321.9 parts of n-butyl acrylate BA, and 222.0 parts of dimethyl itaconate DMI was added after which the emulsion was stirred for 10 minutes. Next, 0.3 parts of a 70 wt-% slurry of t-butyl hydroperoxide and 0.1 parts of a 1 wt-% solution of FeEDTA were added, followed by a solution of 0.5 parts of i-ascorbic acid in 13.7 parts of water.

After the temperature had reached 70 °C, the batch was stirred for 10 minutes and cooled to 60 °C. Next, 50 % of the remainder of the reactor feed was added, and the contents of the reactor were stirred for 10 minutes. 0.3 parts of a 70 wt-% slurry of t-butyl hydroperoxide were added, followed by a solution of 0.5 parts of i-ascorbic acid in 13.7 parts of water. The temperature reached 66 °C after which the mixture was mixed for another 10 minutes. The batch was cooled to 60 °C. The remainder of the reactor feed were added and the emulsion was again allowed to stir for 10 minutes at 60 °C. 0.3 parts of a 70 wt-% slurry of t-butyl hydroperoxide were added, followed by a solution of 0.5 parts of i-ascorbic acid in 13.7 parts of water. The reaction mixture reached a temperature of 66 °C after which the mixture was mixed for another 10 minutes.

0.3 parts of a 70 wt-% slurry of t-butyl hydroperoxide were added, followed by a solution of 0.5 parts of i-ascorbic acid in 15.8 parts of water and the temperature was maintained at 66 °C for another 30 minutes.

The batch was cooled to 30 °C and 11.1 parts of adipic dihydrazide and 6.3 parts of a BIT (potassium salt) solution in water were added. The solid content of the emulsion was corrected to 44 % using water.

The resulting emulsion had a solid content of 44.0 % and a pH of 7.4.

Preparation of Polymer emulsions 2 and 3 - Vinyl polymer A not containing DXI and vinyl polymer B containing DEI or DBI

A similar procedure as described for Polymer emulsion 1 was followed, where the contents of the reactor feed were changed as shown in Table 1.

Table 1

| | Polymer emulsion 1 | Polymer emulsion 2 | Polymer emulsion 3 |
|---|---|---|---|
| Water | 24.8 | 24.8 | 24.8 |
| diacetone acrylamide DAAM | 11.1 | 11.1 | 11.1 |
| n-butyl acrylate BA | 321.9 | 321.9 | 321.9 |
| dimethyl itaconate DMI | 222.0 | | |
| diethyl itaconate DEI | | 222.0 | |
| di-n-butyl itaconate DBI | | | 222.0 |

Preparation of comparative vinyl polymer A containing DMI (Comparative Oligomer 2)

To a round-bottomed flask equipped with a condenser, thermometer and mechanical stirrer 485.7 parts of water and 0.6 parts of Aerosol GPG were charged. This mixture was heated to 70 °C. At 70 °C 10 % of a reactor feed consisting of 90.3 parts of water, 111.2 parts of methyl methacrylate MMA, 13.1 parts of diacetone acrylamide, 21.8 parts of methacrylic acid, 65.4 parts of dimethyl itaconate, 1.8 parts of Aerosol GPG, and 2.6 parts of 3-mercaptopropionic acid was added and the reactor contents were further heated to 85 °C. At 80 °C a solution consisting of 0.2 parts of ammonium persulphate and 9.9 parts of water was added.

At 85 °C, the remainder of the reactor feed was added over a period of 60 minutes. A catalyst feed, comprising 0.5 parts of ammonium persulphate and 30.1 parts of water was fed to the reactor over a period of 70 minutes. At the end of the addition of the

reactor feed 4.5 parts of water were used to rinse the feed tank and were added to the reactor. A temperature of 85 °C was maintained for 20 minutes after which the reaction mixture was cooled to 80 °C. At 80 °C the emulsion was neutralised using 17.4 parts of a 25 % solution of ammonia in water mixed with 19.0 parts of water. The reaction mixture was subsequently kept at 80 °C for another 20 minutes before it was cooled to room temperature.

The resulting emulsion had a solid content of 24.7 % and a pH of 7.6.

Preparation of comparative vinyl polymer A containing DEI (Comparative Oligomer 3) or containing DBI (Comparative Oligomer 4)

A similar procedure as described for Comparative Oligomer 2 was followed, where the contents of the reactor feed were changed as shown in Table 2.

Table 2

| | Comp Oligomer 2 | Comp Oligomer 3 | Comp Oligomer 4 |
|---|---|---|---|
| Water | 90.3 | 90.3 | 90.3 |
| Aerosol GPG | 1.8 | 1.8 | 1.8 |
| methyl methacrylate MMA | 111.2 | 111.2 | 111.2 |
| diacetone acrylamide | 13.1 | 13.1 | 13.1 |
| methacrylic acid | 21.8 | 21.8 | 21.8 |
| dimethyl itaconate | 65.4 | | |
| diethyl itaconate | | 65.4 | |
| di-n-butyl itaconate | | | 65.4 |
| 3-mercaptopropionic acid | 2.6 | 2.6 | 2.6 |

Preparation of Comparative Polymer emulsions 4, 5 and 6 - containing DMI, DEI, or DBI in the vinyl polymer A phase, and DEI in the vinyl polymer B phase

A similar procedure as described for Polymer emulsion 2 was followed, where for Comparative emulsions 4, 5, and 6 instead of Oligomer 1, Comparative Oligomers 2, 3, and 4 were used, respectively.

Preparation of Comparative Polymer emulsion 7 - vinyl polymer A not containing DXI and vinyl polymer B not containing DXI

A similar procedure as described for Polymer emulsion 1 was followed, where the contents of the reactor feed were changed as shown in Table 3.

Table 3

| | Comparative Polymer emulsion 7 |
|---|---|
| Water | 39.5 |
| diacetone acrylamide | 11.1 |
| n-butyl acrylate | 356.6 |
| methyl methacrylate | 172.5 |

Residual monomer results Polymer emulsions 1, 2 and 3, and Comparative Polymer emulsions 4, 5 and 6

Residual monomer concentrations were determined with head space GC for monomers MMA, BMA, and BA, and using LC for monomers DAAM, DMI, DEI, and DBI.

Residual monomer determination by headspace GC

The concentrations of residual monomer in the Polymer emulsions are analyzed using full evaporation headspace GC using an internal standard. Samples are diluted in water containing a known concentration of an internal standard, in this case IBA (isobutylacrylate). After diluting and mixing the sample a small amount of 10 $\mu$l is transferred to a 20 ml headspace vial and heated to 120°C for 4 minutes. The vial is pressurized and 1 ml of the evaporated content is injected on a two capillary GC columns with a different types of stationary phases. One phase separates based on the difference in boiling point and the other has a more polar phase. This helps to identify possible co-elutions. The temperature of the oven is increased from 40°C to 250°C. flame ionization detectors are used for the detection. The concentration of monomers is calculated using substance specific response factors. These response factors are obtained by calibrating the specific monomers in a solvent suitable for diluting the analyte. Results are reported in mg/kg and the detection limit is calculated at 10 mg/kg.

Residual monomer determination by headspace LC

Concentrations of residual monomer in the Polymer emulsions are analyzed using LC by extraction of the resin samples by accurately weighing 0.5 g of sample and diluting the resin with 4.0 mL of methanol (containing 0.1 % of trifluoroacetic acid to precipitate the polymer). The mixture is stirred using a vortex mixer for 30 minutes, after which the clear liquid phase is transferred to an LC vial. 2 $\mu$L of this liquid is injected onto a UPLC system (Waters Acquity), consisting of an autosampler, quaternary pump and PDA detector. The column used in this analysis is a Waters C18 T3 column, 100x2.1mm, 1.7um particles. The LC gradient which is applied runs from 0.1 trifluoroacetic acid in water to acetonitrile with a flush step of tetrahydrofuran, after which the system is re-requilibrated for the next injection. Monomers are separated according to polarity, and are calibrated with at least 6 points in an external calibration approach. Detection is performed at 230 nm, data processing software is Empower 3 (Waters).

Residual monomer concentrations are reported in Table 4.

Table 4

| | Total residual monomer concentration (ppm) |
|---|---|
| Polymer emulsion 1 | 685 |
| Polymer emulsion 2 | 830 |
| Polymer emulsion 3 | 200 |
| Comparative Polymer emulsion 4 | 11160 |
| Comparative Polymer emulsion 5 | 13500 |
| Comparative Polymer emulsion 6 | 4850 |

Adhesion results Polymer emulsions 1, 2, 3, and Comparative Polymer emulsion 7

Adhesion of the polymeric binders to polyester substrates was determined according to the following procedure.

Films were applied 12 μm wet onto corona treated films and dried for 30 seconds at 80 °C.

To the dry films are applied two strips of Scotch Magic 810 over the entire width onto the test surface whilst pressing it thoroughly in place by hand. Any bubbles of entrapped air should thus be removed. The adhesive tapes is pulled off immediately from left to right and from right to left side. The pulling must be in a shocking backwards motion at an angle of approximately 60°C. Adhesion is determined as the percentage of area left undamaged.

Adhesion is determined directly after drying, after 1 day, and after 7 days. Adhesion results are reported in Table 5.

Mylar® A obtained from DuPont Teijin Films is a polyethylene terephthalate film. White PE obtained from Oerlemans Plastics BV is a 48 micron thick polyethylene film substrate.

29LL210 obtained from Songhan Plastic Technology Co., Ltd is a 27.9 micron thick biaxially oriented, transparent polypropylene film substrate.

Table 5

| | | Adhesion as area undamaged (Immediately) | | | |
|---|---|---|---|---|---|
| | | Polymer emulsion 1 | Polymer emulsion 2 | Polymer emulsion 3 | Comparative Polymer emulsion 7 |
| White PE | Polyethylene | 100 | 97 | 99 | 90 |
| 29LL210 | BOPP | 100 | 100 | 100 | 100 |
| Mylar® A | Polyester | 50 | 90 | 99 | 10 |

| | | Adhesion as area undamaged (after 1 day) | | | |
|---|---|---|---|---|---|
| | | Polymer emulsion 1 | Polymer emulsion 2 | Polymer emulsion 3 | Comparative Polymer emulsion 7 |
| White PE | Polyethylene | 100 | 99 | 99 | 90 |
| 29LL210 | BOPP | 100 | 100 | 100 | 100 |
| Mylar® A | Polyester | 60 | 99 | 99 | 10 |

| | | Adhesion as area undamaged (after 7 days) | | | |
|---|---|---|---|---|---|
| | | Polymer emulsion 1 | Polymer emulsion 2 | Polymer emulsion 3 | Comparative Polymer emulsion 7 |
| White PE | Polyethylene | 100 | 97 | 99 | 90 |
| 29LL210 | BOPP | 100 | 100 | 100 | 100 |
| Mylar® A | Polyester | 90 | 99 | 99 | 10 |

As can be derived from Table 5, the inventive aqueous binder compositions result in a coating with vastly improved adhesion to a polyester substrate or with immediate good adhesion to a polyester substrate.

Preparation of comparative vinyl polymer A not containing crosslinkable functional groups and not containing DXI (Comparative Oligomer 5)

To a round-bottomed flask equipped with a condenser, thermometer and mechanical stirrer 415.9 parts of water and 1.2 parts of a 30 wt-% solution of sodium lauryl sulphate in water, were charged. This mixture was heated to 70 °C. At 70 °C 10 % of a reactor feed, consisting of 73.4 parts of water, 131.7 parts of methyl methacrylate, 39.1 parts of n-butyl methacrylate, 14.9 parts of methacrylic acid, 0.9 parts of isooctyl thioglycolate, and 3.5 parts of a 30 wt-% solution of sodium lauryl sulphate in water, was added and the reactor contents were further heated to 85 °C. At 80 °C 30 % of an

initiator feed, consisting of 0.6 parts of ammonium persulphate and 19.1 parts of water, was added. Once the addition is completed, 7.6 parts of water are added to the remaining initiator feed.

At 85 °C, another 10 % of the reactor feed is added, this time over a period of 10 minutes. At the same time, 14 % of the initiator feed is added over a period of 7 minutes.

After completing both feeds, 2.8 parts of 3-mercaptopropionic acid and 2.8 parts of water are added to the remaining reactor feed and the feed is mixed thoroughly.

The reactor contents are kept at 85 °C for 30 minutes after both feeds have been completed.

Start addition of the remnants of the reactor feed and the initiator feed. Both feeds should take 50 minutes at 85 °C. At the end of the reactor feed, the feed tank is rinsed with 3.8 parts of water, that are next added to the reactor. At the end of the initiator feed, the initiator tank is rinsed with 1.9 parts of water, that are also added to the reactor contents.

The temperature of the reactor is kept at 85 °C for 30 minutes after which a mixture of 17.2 parts of a 25 % solution of ammonia in water and 22.9 parts of water is added to the reactor.

The reaction mixture was subsequently kept at 80 °C for another 20 minutes before it was cooled to room temperature.

The resulting emulsion had a solid content of 24.7 % and a pH of 9.2.

Preparation of Comparative Polymer emulsions 8 - Comparative vinyl polymer A not containing crosslinkable functional groups and not containing DXI, and polymer phase containing DBI

To a round-bottomed flask equipped with a condenser, thermometer and mechanical stirrer 876.7 parts of Comparative Oligomer 5 were added. The contents of the reactor were heated to 60 °C.

33 % of a reactor feed consisting of 99.2 parts of water, 282.7 parts of 2-ethylhexyl acrylate, and 188.5 parts of di-n-butyl itaconate was added after which the emulsion was stirred for 10 minutes. Next, 0.3 parts of a 70 wt-% slurry of t-butyl hydroperoxide and 0.1 parts of a 1 wt-% solution of FeEDTA were added, followed by a solution of 0.5 parts of i-ascorbic acid in 13.7 parts of water.

After the temperature had reached 70 °C, the batch was stirred for 10 minutes and cooled to 60 °C. Next, 50 % of the remainder of the reactor feed was added, and the contents of the reactor were stirred for 10 minutes. 0.3 parts of a 70 wt-% slurry of t-butyl hydroperoxide were added, followed by a solution of 0.5 parts of i-ascorbic acid in 13.7 parts of water. The temperature reached 66 °C after which the mixture was mixed for another 10 minutes. The batch was cooled to 60 °C. The remainder of the reactor feed were added and the emulsion was again allowed to stir for 10 minutes at 60 °C. 0.3 parts of a 70 wt-% slurry of t-butyl hydroperoxide were added, followed by a solution of 0.5 parts of *i*-ascorbic acid in 13.7 parts of water. The reaction mixture reached a temperature of 66 °C after which the mixture was mixed for another 10 minutes.

0.3 parts of a 70 wt-% slurry of t-butyl hydroperoxide were added, followed by a solution of 0.5 parts of *i*-ascorbic acid in 15.8 parts of water and the temperature was maintained at 66 °C for another 30 minutes.

The batch was cooled to 30 °C and 6.3 parts of a BIT (potassium salt) solution in water were added. The solid content of the emulsion was corrected to 44 % using water. The resulting emulsion had a solid content of 44.0 % and a pH of 7.4.

Preparation of Comparative Polymer emulsions 9 - Comparative vinyl polymer A not containing crosslinkable functional groups and not containing DXI, and polymer phase not containing DXI

A similar procedure as described for Polymer emulsion 2 was followed, where for Comparative Polymer emulsion 9 instead of Oligomer 1 Comparative Oligomer 5 was used. The reactor feed was changed as shown in Table 6.

Table 6

| | Comparative Polymer emulsion 8 | Comparative Polymer emulsion 9 |
|---|---|---|
| Water | 99.2 | 99.2 |
| 2-ethylhexyl acrylate | 282.7 | 347.1 |
| Methyl methacrylate | | 124.1 |
| Di-n-butyl itaconate | 188.5 | |

Adhesion results Comparative Polymer emulsions 8 and 9

Adhesion of Comparative Polymer emulsions 8 and 9 is shown in Table 7.

Table 7

| | | Adhesion as area undamaged (Immediately) | |
|---|---|---|---|
| | | Comparative Polymer emulsion 8 | Comparative Polymer emulsion 9 |
| Mylar® A | Polyester | 10 | 10 |

| | | Adhesion as area undamaged (after 1 day) | |
|---|---|---|---|
| | | Comparative Polymer emulsion 8 | Comparative Polymer emulsion 9 |
| Mylar® A | Polyester | 10 | 10 |

| | | Adhesion as area undamaged (after 8 days) | |
|---|---|---|---|
| | | Comparative Polymer Emulsion 8 | Comparative Polymer Emulsion 9 |
| Mylar® A | Polyester | 10 | 10 |

## Claims

**1.** An aqueous vinyl polymer binder composition comprising

(A) dispersed polymer particles comprising at least vinyl polymer A and vinyl polymer B,

wherein the vinyl polymer A has an acid value of from 26 to 110 mg KOH/g of vinyl polymer A,
wherein the vinyl polymer B has an acid value of below 16.5 mg KOH/g of vinyl polymer B,
wherein the weight average molecular weight ($M_w$) of the vinyl polymer B is higher than the weight average molecular weight ($M_w$) of the vinyl polymer A, where the vinyl polymer A and the vinyl polymer B are present in a weight ratio of the vinyl polymer A to the vinyl polymer B of from 5:95 to to 95:5,
wherein the vinyl polymer A is obtained by heterogeneous radical polymerization of a monomer composition A in an aqueous phase,
wherein the monomer composition A comprises

i. ethylenically unsaturated monomers bearing crosslinkable functional groups in an amount of from 0.5 to 15 wt.% based on the total weight of the monomer composition A, and
ii. at most 2.5 wt.% of dialkyl itaconate ester, based on the total weight of the monomer composition A; and

wherein the vinyl polymer B is obtained by emulsion polymerizing a monomer composition B in the presence of the vinyl polymer A,
wherein the monomer composition B comprises

i. dimethyl itaconate ester, diethyl itaconate ester or dibutyl itaconate ester, respectively, in an amount of from 20 to 60 wt.% based on the total weight of the monomer composition B, and
ii. at most 2.5 wt.% of at least one additional dialkyl itaconate ester, based on the total weight of the monomer composition B; and

(B) a crosslinking agent.

**2.** The composition according to claim 1, wherein the monomer composition B comprises diethyl itaconate ester or dibutyl itaconate ester, respectively, in an amount of from 20 to 60 wt.% based on the total weight of the monomer composition B, more preferably, the monomer composition B comprises diethyl itaconate ester in an amount of from 20 to 60 wt.% based on the total weight of the monomer composition B and wherein monomer composition B comprises at most 2.5 wt.% of at least one additional dialkyl itaconate ester, based on the total weight of the monomer composition B.

3. The composition according to any one of the preceding claims, wherein the dialkyl itaconate ester that is present in the monomer composition B is diethyl itaconate ester or dibutyl itaconate ester, more preferably the dialkyl itaconate ester that is present in the monomer composition B is diethyl itaconate ester.

4. The composition according to any one of the preceding claims, wherein the monomer composition A is free of dialkyl itaconate esters.

5. The composition according to claim 1, wherein the monomer composition A consists of

A1) at least one carboxylic acid functional ethylenically unsaturated monomer A1;
A2) at least one ethylenically unsaturated monomers bearing crosslinkable functional groups, different from monomers A1, in an amount of from 0.5 to 15 wt.% based on the total weight of the monomer composition A;
A3) optionally dialkyl itaconate ester in an amount of at most 2.5 wt.% based on the total weight of the monomer composition A; and
A4) at least one ethylenically unsaturated monomer A4 different from monomers A1, A2 and A3; and

wherein the monomer composition B consists of

B1) optionally at least one carboxylic acid functional ethylenically unsaturated monomer B1;
B2) dimethyl itaconate ester, diethyl itaconate ester or dibutyl itaconate ester, respectively, in an amount of from 20 to 60 wt.%, preferably in an amount of from 30 to 50 wt.% based on the total weight of the monomer composition B;
B3) optionally ethylenically unsaturated monomer B3 with crosslinkable functional groups different from monomers B1; and
B4) at least one ethylenically unsaturated monomer B4 different from B1, B2 and B3.

6. The composition according to claim 5, wherein the amount of monomer A2 is from 5 to 10 wt.% based on the total weight of the monomer composition A.

7. The composition according to claim 5 or 6, wherein the amount of A3 is 0 wt.% based on the total weight of the monomer composition A.

8. The composition according to any one of claims 5 to 7, wherein monomer B2 is diethyl itaconate ester or di-n-butyl itaconate ester.

9. The composition according to any one of claims 5 to 7, wherein monomer B2 is diethyl itaconate ester.

10. The composition according to any one of claims 5 to 9, wherein the carboxylic acid functional ethylenically unsaturated monomers A1 and, if present, B1 are methacrylic acid and/or acrylic acid.

11. The composition according to any one of claims 5 to 10, wherein the ethylenically unsaturated monomers bearing crosslinkable functional groups A2, and, if present, B3 are independently selected from ketone functional ethylenically unsaturated monomers.

12. The composition according to any one of claims 5 to 11, wherein the ethylenically unsaturated monomers bearing crosslinkable functional groups A2, and, if present, B3 is diacetone acrylamide.

13. The composition according to any one of claims 5 to 12, wherein the monomers A4 and monomers B4 are independently selected from the group consisting of acrylates, methacrylates, arylalkylenes and any mixture thereof.

14. The composition according to any one of the preceding claims, wherein the monomer composition A is subjected to emulsion polymerisation to obtain a carboxylic acid functional vinyl polymer and at least part of the carboxylic acid groups of said carboxylic acid functional vinyl polymer are deprotonated to obtain the vinyl polymer A.

15. The composition according to any one of the preceding claims, wherein the crosslinking agent is a dihydrazide functional compound.

16. The composition according to any one of the preceding claims, wherein the total amount of vinyl polymer A and vinyl

polymer B is at least 50 wt.% based on the total weight of the binders present in the aqueous binder composition.

**17.** An aqueous coating composition comprising an aqueous binder composition according to any one of the preceding claims and further comprising at least one conventional ingredient.

**18.** A coated substrate comprising (a) a substrate having a major surface; and (b) a coating deposited on at least a portion of the major surface of the substrate, wherein the coating is formed from the aqueous coating composition of claim 17.

**19.** The coated substrate according to claim 18, wherein the substrate is a polyester-based substrate comprising at least 75 wt.% of polyester preferably selected from the group consisting of polyethylene terephthalate, polyethylene naphthalate, ethylene terephthalate-ethylene naphthalate copolymer and any mixture thereof.

**Patentansprüche**

**1.** Wässrige Vinylpolymer-Bindemittelzusammensetzung, umfassend

(A) dispergierte Polymerpartikel, die mindestens Vinylpolymer A und Vinylpolymer B umfassen,

wobei das Vinylpolymer A eine Säurezahl von 26 bis 110 mg KOH/g Vinylpolymer A aufweist,
wobei das Vinylpolymer B eine Säurezahl von weniger als 16,5 mg KOH/g Vinylpolymer B aufweist,
wobei das gewichtsmittlere Molekulargewicht ($M_w$) des Vinylpolymers B höher als das gewichtsmittlere Molekulargewicht ($M_w$) des Vinylpolymers A ist, wobei das Vinylpolymer A und das Vinylpolymer B in einem Gewichtsverhältnis von Vinylpolymer A zu Vinylpolymer B von 5:95 bis 95:5 vorliegen,
wobei das Vinylpolymer A durch heterogene radikalische Polymerisation einer Monomerzusammensetzung A in wässriger Phase erhalten wird,
wobei die Monomerzusammensetzung A Folgendes umfasst:

i. ethylenisch ungesättigte Monomere mit vernetzbaren funktionellen Gruppen in einer Menge von 0,5 bis 15 Gew.- %, bezogen auf das Gesamtgewicht der Monomerzusammensetzung A, und
ii. höchstens 2,5 Gew.-% Dialkylitaconatester, bezogen auf das Gesamtgewicht der Monomerzusammensetzung A; und wobei das Vinylpolymer B durch Emulsionspolymerisation einer Monomerzusammensetzung B in Gegenwart des Vinylpolymers A erhalten wird,

wobei die Monomerzusammensetzung B Folgendes umfasst:

i. Dimethylitaconatester, Diethylitaconatester bzw. Dibutylitaconatester in einer Menge von 20 bis 60 Gew.- %, bezogen auf das Gesamtgewicht der Monomerzusammensetzung B, und
ii. höchstens 2,5 Gew.-% mindestens eines zusätzlichen Dialkylitaconatesters, bezogen auf das Gesamtgewicht der Monomerzusammensetzung B; und

(B) ein Vernetzungsmittel.

**2.** Zusammensetzung nach Anspruch 1, wobei die Monomerzusammensetzung B Diethylitaconatester bzw. Dibutylitaconatester in einer Menge von 20 bis 60 Gew.- %, bezogen auf das Gesamtgewicht der Monomerzusammensetzung B, umfasst, weiter bevorzugt die Monomerzusammensetzung B Diethylitaconatester in einer Menge von 20 bis 60 Gew.-%, bezogen auf das Gesamtgewicht der Monomerzusammensetzung B, umfasst, und wobei die Monomerzusammensetzung B höchstens 2,5 Gew.-% mindestens eines zusätzlichen Dialkylitaconatesters, bezogen auf das Gesamtgewicht der Monomerzusammensetzung B, umfasst.

**3.** Zusammensetzung nach einem der vorhergehenden Ansprüche, wobei es sich bei dem Dialkylitaconatester, der in der Monomerzusammensetzung B vorliegt, um Diethylitaconatester oder Dibutylitaconatester handelt, weiter bevorzugt es sich bei dem Dialkylitaconatester, der in der Monomerzusammensetzung B vorliegt, um Diethylitaconatester handelt.

**4.** Zusammensetzung nach einem der vorhergehenden Ansprüche, wobei die Monomerzusammensetzung A frei von Dialkylitaconatestern ist.

5. Zusammensetzung nach Anspruch 1, wobei die Monomerzusammensetzung A aus Folgendem besteht:

A1) mindestens einem carbonsäurefunktionellen ethylenisch ungesättigten Monomer A1;
A2) mindestens einem ethylenisch ungesättigten Monomer mit vernetzbaren funktionellen Gruppen, die von den Monomeren A1 verschieden sind, in einer Menge von 0,5 bis 15 Gew.-%, bezogen auf das Gesamtgewicht der Monomerzusammensetzung A;
A3) gegebenenfalls Dialkylitaconatester in einer Menge von höchstens 2,5 Gew.-%, bezogen auf das Gesamtgewicht der Monomerzusammensetzung A; und
A4) mindestens einem ethylenisch ungesättigten Monomer A4, das von den Monomeren A1, A2 und A3 verschieden ist; und
wobei die Monomerzusammensetzung B aus Folgendem besteht:

B1) gegebenenfalls mindestens einem carbonsäurefunktionellen ethylenisch ungesättigten Monomer B1;
B2) Dimethylitaconatester, Diethylitaconatester bzw. Dibutylitaconatester in einer Menge von 20 bis 60 Gew.- %, vorzugsweise in einer Menge von 30 bis 50 Gew.-%, bezogen auf das Gesamtgewicht der Monomerzusammensetzung B;
B3) gegebenenfalls ethylenisch ungesättigtem Monomer B3 mit vernetzbaren funktionellen Gruppen, das von Monomeren B1 verschieden ist; und
B4) mindestens einem ethylenisch ungesättigten Monomer B4, das von B1, B2 und B3 verschieden ist.

6. Zusammensetzung nach Anspruch 5, wobei die Menge von Monomer A2 5 bis 10 Gew.-%, bezogen auf das Gesamtgewicht der Monomerzusammensetzung A, beträgt.

7. Zusammensetzung nach Anspruch 5 oder 6, wobei die Menge von A3 0 Gew.-%, bezogen auf das Gesamtgewicht der Monomerzusammensetzung A, beträgt.

8. Zusammensetzung nach einem der Ansprüche 5 bis 7, wobei es sich bei Monomer B2 um Diethylitaconatester oder Di-n-butylitaconatester handelt.

9. Zusammensetzung nach einem der Ansprüche 5 bis 7, wobei es sich bei Monomer B2 um Diethylitaconatester handelt.

10. Zusammensetzung nach einem der Ansprüche 5 bis 9, wobei es sich bei den carbonsäurefunktionellen ethylenisch ungesättigten Monomeren A1 und, falls vorhanden, B1 um Methacrylsäure und/oder Acrylsäure handelt.

11. Zusammensetzung nach einem der Ansprüche 5 bis 10, wobei die ethylenisch ungesättigten Monomere mit vernetzbaren funktionellen Gruppen A2 und, falls vorhanden, B3 unabhängig aus ketonfunktionellen ethylenisch ungesättigten Monomeren ausgewählt sind.

12. Zusammensetzung nach einem der Ansprüche 5 bis 11, wobei es sich bei den ethylenisch ungesättigten Monomeren mit vernetzbaren funktionellen Gruppen A2 und, falls vorhanden, B3 um Diacetonacrylamid handelt.

13. Zusammensetzung nach einem der Ansprüche 5 bis 12, wobei die Monomere A4 und die Monomere B4 unabhängig aus der Gruppe bestehend aus Acrylaten, Methacrylaten, Arylalkylenen und einer beliebigen Mischung davon ausgewählt sind.

14. Zusammensetzung nach einem der vorhergehenden Ansprüche, wobei die Monomerzusammensetzung A einer Emulsionspolymerisation unterworfen wird, bei der ein carbonsäurefunktionelles Vinylpolymer erhalten wird, und mindestens ein Teil der Carbonsäuregruppen des carbonsäurefunktionellen Vinylpolymers deprotoniert wird, wobei das Vinylpolymer A erhalten wird.

15. Zusammensetzung nach einem der vorhergehenden Ansprüche, wobei es sich bei dem Vernetzungsmittel um eine dihydrazidfunktionelle Verbindung handelt.

16. Zusammensetzung nach einem der vorhergehenden Ansprüche, wobei die Gesamtmenge von Vinylpolymer A und Vinylpolymer B mindestens 50 Gew.-%, bezogen auf das Gesamtgewicht der in der wässrigen Bindemittelzusammensetzung vorliegenden Bindemittel, beträgt.

**17.** Wässrige Beschichtungszusammensetzung, umfassend eine wässrige Bindemittelzusammensetzung nach einem der vorhergehenden Ansprüche und ferner umfassend mindestens einen herkömmlichen Inhaltsstoff.

**18.** Beschichtetes Substrat, umfassend (a) ein Substrat mit einer Hauptoberfläche und (b) eine Beschichtung, die auf mindestens einem Teil der Hauptoberfläche des Substrats abgeschieden ist, wobei die Beschichtung aus der wässrigen Beschichtungszusammensetzung nach Anspruch 17 gebildet ist.

**19.** Beschichtetes Substrat nach Anspruch 18, wobei es sich bei dem Substrat um ein Substrat auf Polyesterbasis handelt, das mindestens 75 Gew.-% Polyester umfasst, der vorzugsweise aus der Gruppe bestehend aus Polyethylenterephthalat, Polyethylennaphthalat, Ethylenterephthalat-Ethylennaphthalat-Copolymer und einer beliebigen Mischung davon ausgewählt ist.

## Revendications

**1.** Composition aqueuse de liants polymères vinyliques comprenant

(A) des particules dispersées de polymères comprenant au moins un polymère vinylique A et un polymère vinylique B,

le polymère vinylique A ayant un indice d'acide allant de 26 à 110 mg de KOH/g de polymère vinylique A,
le polymère vinylique B ayant un indice d'acide au-dessous de 16,5 mg de KOH/g de polymère vinylique B,
la masse moléculaire moyenne en poids ($M_w$) du polymère vinylique B étant supérieure à la masse moléculaire moyenne en poids ($M_w$) du polymère vinylique A, le polymère vinylique A et le polymère vinylique B étant présents en un rapport pondéral du polymère vinylique A au polymère vinylique B allant de 5:95 à 95:5,
le polymère vinylique A étant obtenu par polymérisation radicalaire hétérogène d'une composition de monomères A en phase aqueuse,
la composition de monomères A comprenant

i. des monomères à insaturation éthylénique portant des groupes fonctionnels réticulables en une quantité allant de 0,5 à 15 % en poids par rapport au poids total de la composition de monomères A et
ii. au maximum 2,5 % en poids d'ester itaconate de dialkyle, par rapport au poids total de la composition de monomères A ; et

le polymère vinylique B étant obtenu par polymérisation en émulsion d'une composition de monomères B en présence du polymère vinylique A,
la composition de monomères B comprenant

i. de l'ester itaconate de diméthyle, de l'ester itaconate de diéthyle ou de l'ester itaconate de dibutyle, respectivement, en une quantité allant de 20 à 60 % en poids par rapport au poids total de la composition de monomères B et
ii. au maximum 2,5 % en poids d'au moins un ester itaconate de dialkyle supplémentaire, par rapport au poids total de la composition de monomères B ; et

(B) un agent de réticulation.

**2.** Composition selon la revendication 1, la composition de monomères B comprenant de l'ester itaconate de diéthyle ou de l'ester itaconate de dibutyle, respectivement, en une quantité allant de 20 à 60 % en poids par rapport au poids total de la composition de monomères B, plus préférablement, la composition de monomères B comprenant de l'ester itaconate de diéthyle en une quantité allant de 20 à 60 % en poids par rapport au poids total de la composition de monomères B et la composition de monomères B comprenant au maximum 2,5 % en poids d'au moins un ester itaconate de dialkyle supplémentaire, par rapport au poids total de la composition de monomères B.

**3.** Composition selon l'une quelconque des revendications précédentes, l'ester itaconate de dialkyle qui est présent dans la composition de monomères B étant l'ester itaconate de diéthyle ou l'ester itaconate de dibutyle, plus préférablement l'ester itaconate de dialkyle qui est présent dans la composition de monomères B étant l'ester itaconate de diéthyle.

4. Composition selon l'une quelconque des revendications précédentes, la composition de monomères A étant exempte d'esters itaconates de dialkyle.

5. Composition selon la revendication 1, la composition de monomères A étant constituée de

A1) au moins un monomère à insaturation éthylénique et à fonction acide carboxylique A1 ;
A2) au moins un monomère à insaturation éthylénique portant des groupes fonctionnels réticulables, différent des monomères A1, en une quantité allant de 0,5 à 15 % en poids par rapport au poids total de la composition de monomères A ;
A3) éventuellement un ester itaconate de dialkyle en une quantité d'au maximum 2,5 % en poids par rapport au poids total de la composition de monomères A ; et
A4) au moins un monomère à insaturation éthylénique A4 différent des monomères A1, A2 et A3 ; et
la composition de monomères B étant constituée de
B1) éventuellement au moins un monomère à insaturation éthylénique et à fonction acide carboxylique B1 ;
B2) l'ester itaconate de diméthyle, l'ester itaconate de diéthyle ou l'ester itaconate de dibutyle, respectivement, en une quantité allant de 20 à 60 % en poids, de préférence en une quantité allant de 30 à 50 % en poids par rapport au poids total de la composition de monomères B ;
B3) éventuellement un monomère à insaturation éthylénique B3 renfermant des groupes fonctionnels réticulables différent des monomères B1 ; et
B4) au moins un monomère à insaturation éthylénique B4 différent de B1, B2 et B3.

6. Composition selon la revendication 5, la quantité de monomère A2 allant de 5 à 10 % en poids par rapport au poids total de la composition de monomères A.

7. Composition selon la revendication 5 ou 6, la quantité de A3 étant de 0 % en poids par rapport au poids total de la composition de monomères A.

8. Composition selon l'une quelconque des revendications 5 à 7, le monomère B2 étant l'ester itaconate de diéthyle ou l'ester itaconate de di-n-butyle.

9. Composition selon l'une quelconque des revendications 5 à 7, le monomère B2 étant l'ester itaconate de diéthyle.

10. Composition selon l'une quelconque des revendications 5 à 9, les monomères à insaturation éthylénique et à fonction acide carboxylique A1 et, s'ils sont présents, B1 étant l'acide méthacrylique et/ou l'acide acrylique.

11. Composition selon l'une quelconque des revendications 5 à 10, les monomères à insaturation éthylénique portant des groupes fonctionnels réticulables A2 et, s'ils sont présents, B3 étant indépendamment choisis parmi les monomères à insaturation éthylénique et à fonction cétone.

12. Composition selon l'une quelconque des revendications 5 à 11, les monomères à insaturation éthylénique portant des groupes fonctionnels réticulables A2 et, s'ils sont présents, B3 étant l'acrylamide de diacétone.

13. Composition selon l'une quelconque des revendications 5 à 12, les monomères A4 et les monomères B4 étant indépendamment choisis dans le groupe constitué par les acrylates, les méthacrylates, les arylalkylènes et un quelconque mélange de ceux-ci.

14. Composition selon l'une quelconque des revendications précédentes, la composition de monomères A étant soumise à une polymérisation en émulsion pour obtenir un polymère vinylique à fonction acide carboxylique et au moins une partie des groupes acide carboxylique dudit polymère vinylique à fonction acide carboxylique étant déprotonés pour obtenir le polymère vinylique A.

15. Composition selon l'une quelconque des revendications précédentes, l'agent de réticulation étant un composé à fonction dihydrazide.

16. Composition selon l'une quelconque des revendications précédentes, la quantité totale de polymère vinylique A et de polymère vinylique B étant d'au moins 50 % en poids par rapport au poids total des liants présents dans la composition aqueuse de liants.

**17.** Composition aqueuse de revêtement comprenant une composition aqueuse de liants selon l'une quelconque des revendications précédentes et comprenant en outre au moins un ingrédient classique.

**18.** Substrat revêtu comprenant (a) un substrat ayant une surface principale ; et (b) un revêtement déposé sur au moins une partie de la surface principale du substrat, le revêtement étant formé à partir de la composition aqueuse de revêtement selon la revendication 17.

**19.** Substrat revêtu selon la revendication 18, le substrat étant un substrat à base de polyester comprenant au moins 75 % en poids de polyester de préférence choisi dans le groupe constitué par le poly(téréphtalate d'éthylène), le poly(naphtalate d'éthylène), un copolymère de téréphtalate d'éthylène-naphtalate d'éthylène et un quelconque mélange de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4988762 A
- WO 2003031526 A
- WO 9529963 A
- US 2014058031 A
- US 9012027 B
- US 2015010863 A
- WO 9529944 A
- US 4151143 A
- WO 2013113936 A


### Non-patent literature cited in the description


- **D.C. BLACKLEY**. *Handbook Emulsion Polymerization: Theory and Practice*, 1975, ISSN 978-0-85334-627-2